# FASCICULE DE BREVET EUROPEEN

(11) **EP 0 597 077 B1**
(45) Date de publication et mention de la délivrance du brevet: **08.01.1997**
(21) Numéro de dépôt: 93913069.6
(22) Date de dépôt: 25.05.1993
(51) Int. Cl.: B23Q 3/10

(54) **OUTILLAGE DE PREHENSION POUR L'USINAGE DE PIECES SUR UNE MACHINE-OUTIL**
AUFSPANN-VORRICHTUNG ZUM BEARBEITEN VON WERKSTÜCKEN AUF WERKZEUGMASCHINEN
GRIPPING TOOL FOR WORKPIECES TO BE MACHINED

(30) Priorité: 26.05.1992 FR 9206424
(43) Date de publication de la demande: 18.05.1994
(73) Titulaire: AEROSPATIALE Société Nationale Industrielle, 75781 Paris Cédex 16 (FR)
(72) Inventeur: LANVIN, Hervé, F-80800 Bonnay (FR)
(74) Mandataire: Poulin, Gérard
(86) Numéro de dépôt international: FR9300509
(87) Numéro de publication internationale: WO9324271

(56) Documents cités:
- EP-A- 0 209 100
- EP-A- 0 298 168
- WO-A-91/12925
- DE-A- 3 341 542
- FR-A- 2 530 520

## Description

L'invention concerne un outillage de préhension conçu pour être monté sur une machine-outil afin de permettre l'usinage complet d'une pièce ou d'une série de pièces sur cette machine-outil.

La fabrication de pièces de formes diverses sur des machines-outils impose de placer ces pièces dans des outillages de préhension spécifiques, de formes et de dimensions adaptées.

WO-A1-91/12925 décrit un outillage de préhension, pour l'usinage de pièces sur une machine-outil, comprenant une unité centrale apte à être montée sur un plateau d'usinage d'une machine-outil, des moyens de préhension des pièces à usiner, l'unité centrale comportant des moyens de commande pour actionner les moyens de préhension. Dans l'état actuel de la technique, ces outillages de préhension sont des organes unitaires, directement installés sur le plateau de la machine. Leur mise en place et leur réglage nécessitent donc un arrêt de fonctionnement relativement long, pénalisant pour le rendement de la machine.

De plus, étant donné que la fabrication complète d'une pièce nécessite en principe de monter cette pièce successivement dans deux outillages de préhension différents, les périodes d'arrêt de la machine nécessaires au montage et au réglage des outillages de préhension se trouvent doublées.

L'invention a précisément pour objet un outillage de préhension, de conception modulaire ou non unitaire, permettant une préparation et un réglage préalables des parties actives de l'outillage en dehors de la machine-outil, puis une mise en place aisée et rapide de ces parties actives, et permettant d'usiner en totalité des pièces ou des séries de pièces sans nécessiter de réglage complémentaire.

Conformément à l'invention, ce résultat est obtenu au moyen d'un outillage de préhension, pour l'usinage de pièces sur une machine-outil, comprenant une unité centrale apte à être montée sur un plateau d'usinage d'une machine-outil et comportant des moyens de bridage pour la fixation simultanée d'au moins deux modules de préhension différents sur l'unité centrale, chacun de ces modules de préhension comprenant des moyens de préhension des pièces à usiner, l'unité centrale comportant de plus des moyens de commande pour actionner les moyens de bridage et les moyens de préhension.

Dans un outillage de préhension ainsi réalisé, l'unité centrale est installée sur le plateau d'usinage de la machine-outil et peut recevoir différents modules de préhension adaptés aux pièces dont on désire effectuer l'usinage. Etant donné que la fixation des modules de préhension sur l'unité centrale s'effectue rapidement en des emplacements et selon des orientations bien définies dans un repère orthonormé lié à la machine, les réglages peuvent être effectués à l'avance sur chacun des modules de préhension avant que ces modules ne soient montés sur l'unité centrale. On réalise ainsi un gain de temps appréciable par rapport aux outillages de préhension utilisés précédemment, qui devaient être réglés directement sur le plateau de la machine.

De plus, la présence de plusieurs modules de préhension différents sur l'unité centrale permet d'utiliser successivement au moins deux modules différents pour effectuer l'usinage complet d'une pièce. En effet, l'un des modules de préhension permet d'effectuer une première série d'opérations d'usinage des pièces, après quoi ces dernières sont placées dans un deuxième module de préhension servant à effectuer une deuxième série d'opérations d'usinage utilisant comme référence les surfaces usinées au cours de la première série d'opérations d'usinage. Etant donné que les modules de préhension sont réglés avant leur installation sur l'unité centrale, aucun réglage n'est nécessaire avant l'exécution de la deuxième série d'opérations d'usinage.

Selon un mode de réalisation préféré de l'invention, les moyens de bridage comprennent des premiers vérins hydrauliques et les moyens de préhension comprennent des deuxièmes vérins hydrauliques. Les moyens de commande sont alors des moyens de commande hydraulique qui agissent sur les premiers et les deuxièmes vérins.

Avantageusement, les moyens de commande hydraulique comprennent un premier circuit qui agit sur les premiers vérins et sur les deuxièmes vérins associés au premier module de préhension par une pression de service donnée, et un deuxième circuit qui agit sur les deuxièmes vérins associés au deuxième module de préhension par une pression réglable, inférieure à cette pression de service. Cette caractéristique permet d'éviter d'endommager les surfaces déjà usinées ou de déformer la pièce lorsqu'on effectue la deuxième série d'opérations d'usinage.

De préférence le premier circuit comprend des moyens de contrôle du maintien de la pression de service au-dessus d'un niveau minimal de pression prédéterminé et le deuxième circuit comprend des moyens de contrôle de la pression réglable.

Les premiers vérins sont avantageusement constitués par des vérins de bridage montés sur l'unité centrale.

Par ailleurs, en fonction de la nature des pièces qui doivent être montées dans les modules de préhension, les deuxièmes vérins peuvent comprendre :
- des vérins de commande montés sur l'unité centrale de façon à agir sur des organes de serrage mécanique des pièces, montés sur le module de préhension ;
- des vérins de commande montés directement sur le module de préhension et agissant sur des organes de serrage mécanique des pièces également, montés sur ce module ; ou encore
- des vérins de serrage des pièces montés directement sur le module de préhension.

On décrira à présent, à titre d'exemple non limitatif, un mode de réalisation préféré de l'invention, en se référant aux dessins annexés, dans lesquels :
- la figure 1 est une vue en perspective éclatée, prise de l'arrière, représentant un outillage de préhension conforme à l'invention ;
- la figure 2 est une vue en perspective représentant l'unité centrale de l'outillage illustrée sur la figure 1, prise de l'avant ;
- les figures 3A et 3B sont des vues en perspective représentant l'étau horizontal de l'outillage illustré sur la figure 1, respectivement dans le cas où il est utilisé pour serrer une pièce à usiner de relativement grande dimension et dans le cas où il est utilisé pour serrer deux pièces de relativement petite dimension ;
- la figure 4 est une vue en coupe illustrant un module apte à être utilisé dans l'outillage de préhension de la figure 1 et sur lequel le bridage de la pièce est obtenu par des organes de serrage mécanique commandés par des vérins embarqués sur l'unité centrale ;
- la figure 5 est une vue en coupe comparable à la figure 4 représentant un autre module apte à être utilisé dans l'outillage de la figure 1, ce module étant équipé de vérins de serrage pivotant assurant directement la préhension de la pièce ;
- la figure 6 est une vue en coupe comparable aux figures 4 et 5 illustrant un autre module apte à être utilisé dans l'outillage de la figure 1, dans lequel le serrage des pièces est assuré par des vérins de commande montés directement sur le module et agissant sur la pièce au travers d'organes de serrage mécanique ; et
- la figure 7 est un schéma illustrant le circuit hydraulique de commande de l'outillage de préhension illustré sur la figure 1.

L'outillage de préhension conforme à l'invention est prévu pour être monté sur le plateau d'usinage d'une machine-outil, afin de permettre la préhension des pièces qui doivent être usinées sur cette machine sans que des réglages longs et pénalisants n'aient à être effectués sur la machine lorsque l'on modifie le type de pièces usinées ou lorsque l'usinage complet d'une pièce nécessite de la démonter, puis de la saisir différemment.

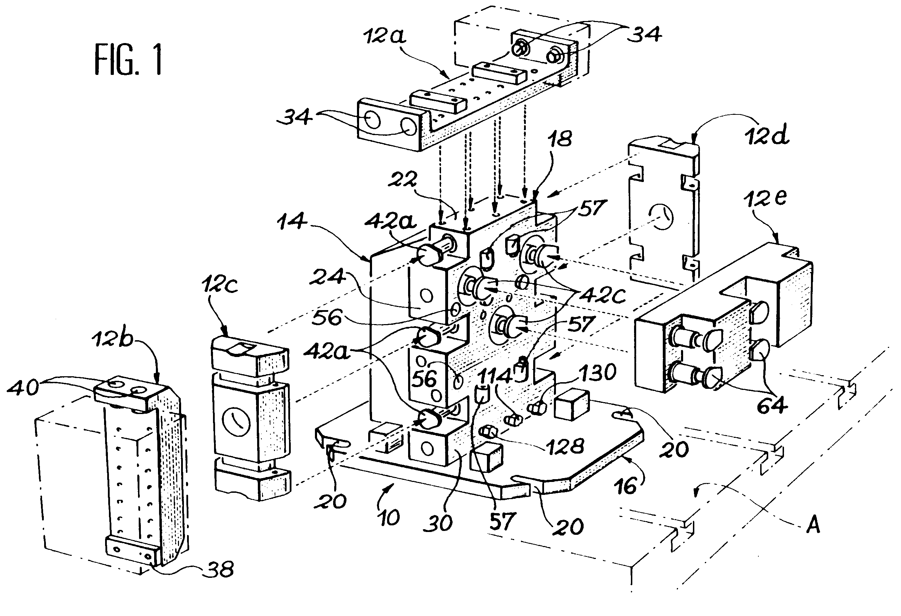

Ce résultat est obtenu conformément à l'invention en utilisant un outillage de préhension tel que celui qui est représenté sur la figure 1, constitué d'une unité centrale 10 prévue pour être montée directement sur le plateau d'usinage horizontal A de la machine-outil, et d'un certain nombre de modules de préhension tels que ceux qui sont désignés par les références 12a à 12e sur la figure 1. Deux à quatre de ces modules de préhension peuvent être fixés simultanément sur l'unité centrale 10 par des moyens de commande hydraulique 14 embarqués sur cette dernière.

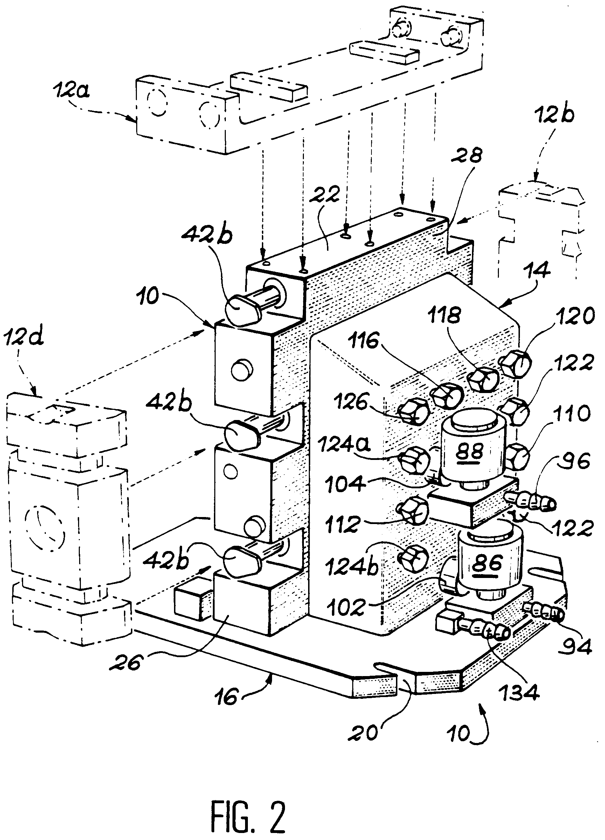

Comme l'illustrent plus précisément les figures 1 et 2, l'unité centrale 10 est une structure mécano-soudée qui comprend une semelle horizontale 16 et un corps vertical 18.

La semelle 16 se présente sous la forme d'une plaque rectangulaire prévue pour être fixée sur le plateau d'usinage horizontal A de la machine outil. Cette plaque comporte à cet effet des trous ou des encoches 20 que peuvent traverser des organes de fixation démontables tels que des goujons, des vis ou des boulons (non représentés).

Le corps vertical 18 est solidaire de la semelle 16 et se dresse selon une direction perpendiculaire à celle-ci sur sa face supérieure. Ce corps vertical 18 présente de façon générale une forme parallélépipédique et comporte une face supérieure 22, deux faces latérales 24 et 26, une face avant 28 et une face arrière 30. Comme l'illustre notamment la figure 2, la face avant 28 porte les moyens de commande 14, dont la description détaillée sera faite par la suite. Les autres faces 22, 24, 26 et 30 sont conçues pour recevoir des modules de préhension tels que les modules 12a à 12e sur la figure 1, par l'intermédiaire de moyens de bridage qui peuvent être manoeuvrés rapidement à l'aide des moyens de commande 14. Cet agencement permet d'effectuer les réglages des différents modules de préhension 12a à 12e avant qu'ils ne soient montés sur l'unité centrale 10. Les pertes de temps liées à ces réglages sont ainsi réduites au minimum.

Dans l'exemple de réalisation illustré sur la figure 1, les différents modules de préhension qui peuvent être montés sur l'unité centrale 10 comprennent un étau horizontal 12a, un étau vertical 12b, et trois modules 12c, 12d et 12e. Dans ce cas et à la différence des autres modules de préhension, l'étau horizontal 12a est normalement fixé à demeure sur la face supérieure 22 du corps vertical 18, par exemple au moyen de six vis (non représentées). L'étau vertical 12b ainsi que les modules 12c et 12d sont prévus pour être montés sur les faces latérales 24 et 26 du corps vertical 18 par les moyens de bridage pilotés par les moyens de commande 14. De même, le module 12e est prévu pour être fixé sur la face arrière 30 du corps vertical 18 par les moyens de bridage pilotés par les moyens de commande 14.

Comme l'illustrent notamment les figures 1 et 2, les moyens de bridage par lesquels l'étau vertical 12b ainsi que des modules tels que les modules 12c et 12d peuvent être fixés de façon interchangeable sur les faces latérales 24 et 26 du corps vertical 18 de l'unité centrale 10 comprennent sur chacune de ces faces latérales trois vérins de bridage alignés, désignés respectivement par les références 42a et 42b pour les faces 24 et 26.

De façon comparable, la fixation d'un module tel que le module 12e sur la face arrière 30 du corps vertical 18 de l'unité centrale 10 s'effectue au moyen de trois vérins de bridage 42c, comme l'illustre la figure 1.

Comme on le verra ultérieurement, chacun des groupes de vérins de bridage 42a, 42b et 42c est commandé simultanément à partir des moyens de commande 14.

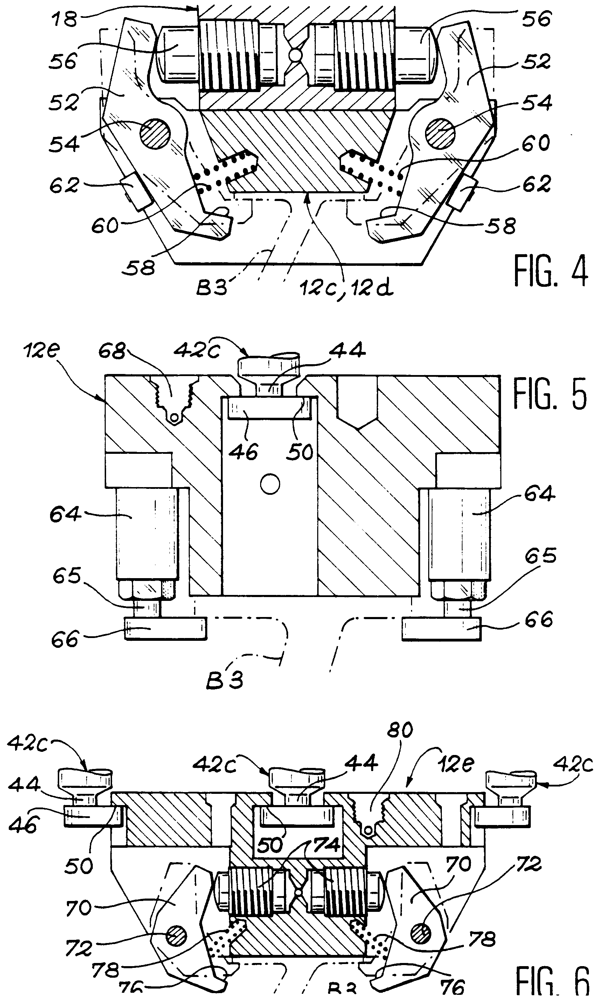

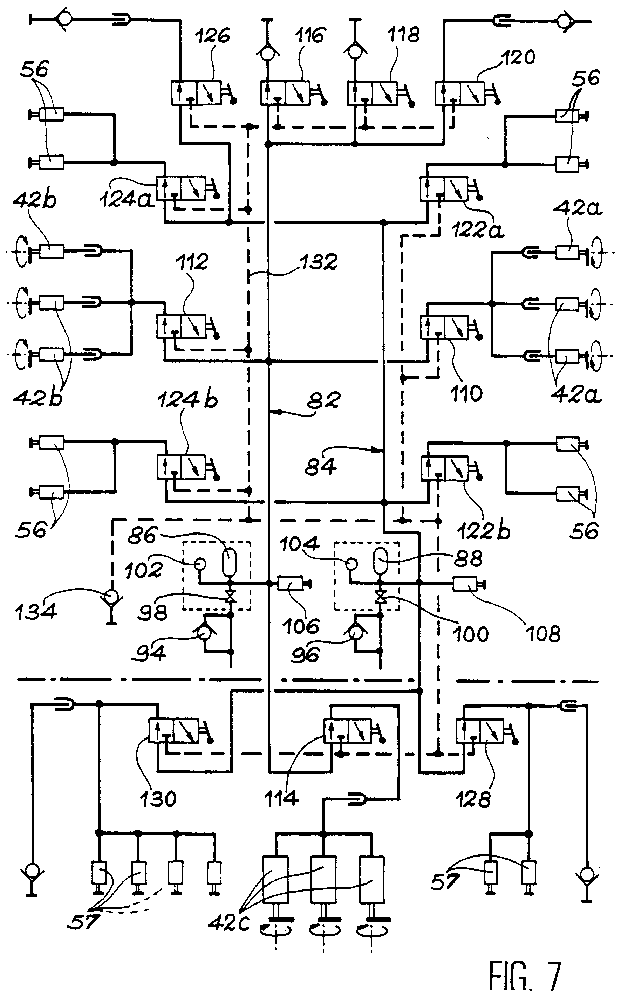

Les vérins de bridage 42a, 42b et 42c sont tous identiques et constitués de préférence par des vérins hydrauliques quart de tour simple effet. Comme l'illustrent notamment les figures 5 et 6, chacun de ces vérins comporte une tige 44, mobile en rotation et en translation, et dont l'extrémité porte une bride 46.

Lorsque le vérin est au repos, cette bride 46 fait saillie au-delà de la face correspondante 24, 26 ou 30 du corps vertical 18 et présente une orientation angulaire telle qu'elle n'empêche pas l'application du module de préhension approprié contre cette face.

Lorsque les vérins de bridage 42a, 42b ou 42c sont actionnés, les tiges 44 portant les brides 46 pivotent tout d'abord d'un quart de tour, ce qui a pour effet d'amener ces brides en face de surfaces de bridage telles que les surfaces 50 sur les figures 5 et 6, prévues sur le module de préhension correspondant. Dans un deuxième temps, les tiges 44 des vérins se rétractent vers l'intérieur du corps vertical 18, ce qui a pour effet d'amener les brides 46 en appui contre ces surfaces 50 et, par conséquent, de fixer le module de préhension correspondant sur l'unité centrale 10.

Lorsque les vérins de bridage sont actionnés dans le sens du relâchement, la pression hydraulique assurant le bridage des modules de préhension est relâchée et des ressorts de rappel incorporés aux vérins ramènent ces derniers dans leurs positions initiales. Les modules de préhension se trouvent ainsi immédiatement libérés et peuvent être démontés et remplacés à volonté.

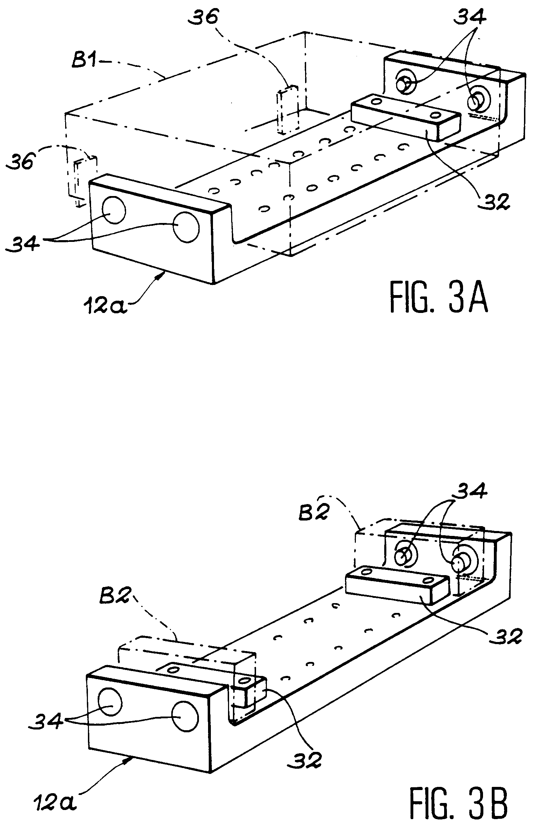

Comme l'illustrent plus précisément les figures 3A et 3B, l'étau horizontal 12a a sensiblement la forme d'un U dont la branche intermédiaire horizontale peut supporter, selon la dimension des pièces à usiner, un ou deux mors fixes 32. Plus précisément, un seul mors fixe 32 est utilisé comme l'illustre la figure 3A lorsqu'on désire usiner une pièce B1 de relativement grande dimension, alors que deux mors fixes 32 peuvent être utilisés pour usiner simultanément deux pièces B2 de relativement petite dimension, comme l'illustre la figure 3B.

La position occupée par le ou les mors fixes 32 sur la branche intermédiaire du U formé par l'étau horizontal 12a peut être réglée en fonction de la dimension de la ou des pièces à usiner. Ainsi et uniquement à titre d'exemple, le ou les mors fixes 32 peuvent coopérer avec cette branche intermédiaire par une denture du type crémaillère (non représentée) permettant de déplacer les mors fixes longitudinalement suivant un pas déterminé, inférieur à la course dont disposent les vérins de serrage associés à l'étau 12a. A titre d'exemple, le pas défini par la denture de type crémaillère peut être de 10 mm si la course maximale des vérins est de 16 mm.

Comme l'illustrent également les figures 3A et 3B, chacune des deux branches verticales de l'étau horizontal 12a supporte deux vérins de serrage 34 dont un actionnement permet de bloquer la ou les pièces à usiner entre ces vérins et le ou les mors fixes 32.

De façon plus précise et comme l'illustre la figure 3A lorsqu'une pièce B1 de grande dimension doit être serrée dans l'étau horizontal 12a, cette pièce est serrée entre l'une des paires de vérins 34 et l'un des mors fixes 32, l'autre paire de vérins de serrage 34 restant inutilisée. Le deuxième mors fixe 32 est alors démonté.

Au contraire, dans le cas où deux pièces B2 de petite dimension sont placées dans l'étau horizontal 12a comme l'illustre la figure 3B, chacune de ces pièces est serrée entre l'une des paires de vérins de serrage 34 et l'un des mors fixes 32.

Avantageusement, l'étau horizontal 12a comprend de plus une ou deux butées latérales 36 (figure 3A), dont la position peut être réglée manuellement par l'opérateur. Une règlette graduée (non représentée) associée à chaque butée latérale 36 permet de visualiser sa position. Comme l'illustre en particulier la figure 3A, les butées latérales 36 facilitent le positionnement de la pièce à usiner dans l'étau horizontal 12a.

L'alimentation en fluide hydraulique des deux paires de vérins de serrage 34 à partir des moyens de commande 14 embarqués sur l'unité centrale 10 s'effectue par l'intermédiaire de deux coupleurs hydrauliques (non représentés). Bien que l'étau 12a soit normalement fixé à demeure sur l'unité centrale 10, cette caractéristique permet un démontage éventuel de cet étau, par exemple lorsqu'un usinage particulier nécessite d'installer sur la face supérieure 22 un module spécial. Cette solution s'impose notamment lorsque les impératifs de fabrication conduisent à devoir placer dans l'étau horizontal 12a une pièce dont les dimensions sont supérieures à la capacité de cet étau.

Dans le mode de réalisation illustré sur la figure 1, l'étau vertical 12b est un étau en forme de L dont la branche verticale supporte un mors fixe 38 et dont la branche horizontale supporte une paire de vérins de serrage 40. Comme le ou les mors fixes 32 de l'étau horizontal 12a, le mors fixe 38 peut être monté sur la branche verticale de l'étau vertical 12b en des emplacements réglables. Grâce à cette configuration, des pièces présentant différentes dimensions peuvent être serrées entre le mors fixe 38 et la paire de vérins de serrage 40.

Comme l'étau horizontal 12a, l'étau vertical 12b est avantageusement équipé d'au moins une butée latérale (non représentée) dont la position peut être réglée de la même manière que les butées latérales 36 de l'étau horizontal 12a.

L'alimentation en fluide hydraulique de la paire de vérins 40 de l'étau vertical 12b à partir des moyens de commande 14 de l'unité centrale 10 s'effectue au travers d'un coupleur analogue aux deux coupleurs qui alimentent les deux paires de vérins 34 de l'étau horizontal 12a.

De façon générale, les étaux 12a et 12b sont prévus pour assurer la préhension de la pièce à usiner sur la machine-outil, lorsque cette pièce se présente sous la forme d'un débit brut ou d'une ébauche de pièce. Une première série d'opérations d'usinage peut alors être effectuée sur la machine-outil.

Au contraire, les modules tels que les modules 12c, 12d et 12e sur la figure 1, sont conçus pour permettre la préhension des pièces à usiner sur la machine-outil après l'exécution de cette première série d'opérations d'usinage. Les surfaces usinées au cours de la première série d'opérations d'usinage servent alors de référence pour le positionnement et le bridage de la pièce semi-finie dans l'un des modules. Il en découle que chaque module est adapté à la pièce à usiner. Lorsque la pièce semi-finie est positionnée et bridée dans le module correspondant, une deuxième série d'opérations d'usinage est exécutée. A la fin de cette deuxième série d'opérations, l'usinage de la pièce est complètement terminé.

Etant donné que l'étau vertical 12b et chacun des modules 12c à 12e peut être rapidement désaccouplé et accouplé de l'unité centrale 10, et que cet accouplement place l'étau et les modules dans des orientations spatiales bien définies selon des repères orthonormés liés à la machine-outil, on comprend qu'un réglage préalable de l'étau et des modules permet d'effectuer l'usinage complet d'une pièce en réduisant au minimum les arrêts de fonctionnement de la machine-outil. En effet, ces arrêts se limitent au temps nécessaire au montage de l'étau ou des modules sur l'unité centrale et au montage et au démontage de la pièce dans les modules de préhension concernés.

Les moyens de commande 14, dont on a vu qu'ils assurent l'actionnement des moyens de bridage constitués par les différents vérins de bridage 42a, 42b et 42c, et l'actionnement des moyens de préhension constitués par les vérins de serrage 34 et 40 des étaux 12a et 12b, commandent également les moyens de préhension embarqués sur les différents modules 12c, 12d et 12e. Ces derniers moyens de préhension peuvent prendre différentes formes qui vont à présent être décrites en se référant aux figures 4 à 6.

En ce qui concerne les modules tels que les modules 12c et 12d sur les figures 1 et 2, prévus pour être montés sur les faces latérales 24 et 26 du corps vertical 18 de l'unité centrale, ils peuvent être équipés soit d'organes de serrage mécanique actionnés par des vérins montés sur l'unité centrale comme l'illustre la figure 4, soit de vérins assurant directement le serrage des pièces, comme l'illustre la figure 5.

En se référant tout d'abord à la figure 4, on voit que les modules 12c et 12d peuvent être équipés d'organes de serrage mécanique 52 qui se présentent sous la forme de leviers sensiblement en forme de V articulés dans leur partie centrale sur le module par des axes 54.

L'une des extrémités de chacun des organes de serrage mécanique 52 est placée en vis-à-vis de la face avant 28 ou de la face arrière 30 du corps vertical 18 de l'unité centrale, de façon à être en appui sur l'extrémité d'une tige d'un vérin de commande 56 ou 57 montée dans le corps vertical 18. Les vérins 56 et 57 peuvent notamment être des vérins hydrauliques linéaires à simple effet.

L'extrémité opposée de chacun des organes de serrage mécanique 52 présente une surface d'appui 58 apte à venir en contact avec une surface usinée de la pièce semi-finie B3 qui doit être montée dans le module correspondant. Lorsque les vérins de commande 56, 57 sont actionnés, la pièce se trouve ainsi fixée dans le module. Lors du relâchement des vérins de commande 56, 57 un ressort de rappel 60 interposé entre le module et chacun des organes de serrage mécanique 52 ramène ces derniers dans une position de repos, illustrée en trait plein sur la figure 4, dans laquelle la surface d'appui 58 libère la pièce B3 montée dans le module. Cette position de repos est déterminée par la venue en appui de l'organe de serrage mécanique 52 contre une butée 62 solidaire du module.

Lorsque la préhension de la pièce sur le module est assurée de la manière qui vient d'être décrite en se référant à la figure 4, le serrage de la (ou des) pièce est dépourvu de toute assistance hydraulique.

Comme l'illustre la figure 5, la préhension des pièces sur les modules tels que 12c et 12d aptes à être montées sur les faces latérales 24 et 26 du corps vertical 18 de l'unité centrale, peut aussi être effectuée au moyen de vérins de serrage 64 qui sont constitués, comme les vérins de bridage 42a, 42b et 42c, par des vérins hydrauliques quart de tour à simple effet. Dans ce cas, la préhension de la pièce B3 est assurée par la bride 66 fixée à l'extrémité de la tige 65 de chacun des vérins 64.

Lorsque la préhension des pièces sur les modules est assurée de la manière qui vient d'être décrite en se référant à la figure 5, l'acheminement du fluide hydraulique entre les moyens de commande 14 portés par l'unité centrale et les vérins de serrage 64 est assuré par l'intermédiaire de coupleurs constitués de deux demi-coupleurs montés respectivement sur le corps vertical 30 et sur le module. Le demi-coupleur 68 monté sur ce dernier apparaît sur la figure 5. Chacun des demi-coupleurs se présente sous la forme d'un cylindre normalement fermé par un piston. Lorsque le module est accouplé à l'unité centrale, la jonction des deux demi-coupleurs libère automatiquement le passage du fluide hydraulique sous pression.

Il est à noter que les coupleurs (non représentés) qui sont prévus par ailleurs entre les étaux 12a et 12b et l'unité centrale sont réalisés de façon identique.

En ce qui concerne les modules tels que le module 12e prévu pour être fixé sur la face arrière 30 du corps vertical 18 de l'unité centrale, ils peuvent être équipés de moyens de préhension constitués par des vérins de serrage hydrauliques 64 tels que des vérins quart de tour à simple effet comme ceux qui viennent d'être décrits en se référant à la figure 5, ou encore de moyens de préhension constitués par des organes de serrage mécanique actionnés par des vérins de commande linéaire à simple effet également montés sur les modules, comme l'illustre la figure 6.

En se référant à cette dernière figure, on voit que les organes de serrage mécanique 70 montés sur le module 12e sont constitués par des leviers sensiblement en forme de V articulés dans leur partie centrale sur le corps du module par des axes 72. Une première extrémité de chacun des organes de serrage mécanique 70 est placée en vis-à-vis de la tige d'un vérin hydraulique linéaire à simple effet 74 monté dans le module. L'extrémité opposée de chaque organe 70 comporte une surface d'appui 76 permettant de fixer la pièce sur le module.

Comme pour les organes de serrage mécanique 52 décrits précédemment en se référant à la figure 4, des ressorts de rappel 78 sont interposés entre le module et chacun des organes 70 pour ramener ces derniers dans une position de repos (illustrée en trait plein sur la figure 6), dans laquelle la surface d'appui 76 est écartée de la pièce B3, lorsque les vérins 74 correspondants ne sont pas actionnés. Dans ce cas, aucune butée n'est nécessaire puisque les vérins de commande 74 sont directement embarqués sur le module.

Comme précédemment, le transfert du fluide hydraulique sous pression entre les moyens de commande 14 montés sur l'unité centrale et le module 12e est assuré par un coupleur hydraulique formé de deux demi-coupleurs dont l'un est représenté en 80 sur la figure 6.

Les moyens de commande hydraulique 14 assurant l'actionnement des vérins de bridage des différents modules de préhension sur l'unité centrale et des moyens de préhension grâce auxquels les pièces peuvent être bloquées dans les modules de préhension vont à présent être décrits en se référant à la figure 7.

Il convient tout d'abord d'observer que ces moyens de commande hydraulique comprennent deux circuits hydrauliques distincts, qui sont désignés par les références générales 82 et 84 sur la figure 7. L'existence de deux circuits hydrauliques distincts s'explique par le fait que certains des vérins qui équipent l'outillage de préhension selon l'invention doivent être actionnés avec une pression de service relativement élevée, alors que d'autres vérins ne doivent être actionnés qu'avec une pression réduite.

De façon plus précise, la fixation des étaux et des modules sur l'unité centrale doit être sûre et nécessite donc une pression d'actionnement élevée. Il en est de même pour le serrage des pièces dans les étaux 12a et 12b, puisque ces derniers prennent appui sur des surfaces des pièces non encore totalement usinées. Par conséquent, les vérins de bridage 42a, 42b et 42c, ainsi que les vérins de serrage 34 et 40 des étaux sont alimentés par le premier circuit 82 à une pression de service élevée, par exemple d'environ 500 bars.

Au contraire, les vérins 56, 57, 64 et 74, qui assurent directement ou indirectement la préhension des pièces sur les modules, doivent être actionnés avec une pression moindre et de préférence réglable, car les surfaces des pièces servant à assurer la préhension sont des surfaces déjà usinées, qu'il est important de ne pas endommager. Par conséquent, ces différents vérins 56, 64 et 74 sont commandés par le deuxième circuit 84.

Par ailleurs, la source de pression servant à alimenter les deux circuits 84 et 86 est constituée par une centrale hydraulique (non représentée) qui n'est raccordée sur les deux circuits 82 et 84 que pendant les phases préparatoires à l'usinage. De façon plus précise, toutes les manoeuvres des différents boutons équipant les moyens de commande 14 et servant à actionner les différents vérins de l'outillage de préhension s'effectuent lorsque la centrale hydraulique est raccordée sur les deux circuits. Un accumulateur 86 et 88, prévu dans chacun de ces circuits, assure ensuite le maintien de la pression dans ces circuits pendant une période de temps prédéterminée, par exemple de dix jours, suffisante pour que l'usinage de toute une série de pièces soit terminé.

La centrale hydraulique est conçue pour fournir au premier circuit 82 une pression de service constante dont on a vu qu'elle pouvait être sensiblement égale à 500 bars. Par ailleurs, la centrale hydraulique fournit au deuxième circuit 84 une pression modulable, inférieure à la pression de service délivrée au premier circuit 82. Cette pression modulable peut par exemple avoir une valeur comprise entre environ 175 et 500 bars.

L'amenée de la pression depuis la centrale hydraulique vers l'un et l'autre des circuits 82 et 84 s'effectue par deux flexibles équipés de raccords rapides et manoeuvrés par l'opérateur. Un deuxième flexible équipé d'un raccord rapide est jumelé à l'un de ces flexibles, pour permettre un retour de fluide hydraulique vers la centrale hydraulique par un circuit différent.

Pour permettre son raccordement sur la centrale hydraulique, chacun des circuits 82 et 84 comporte une unité d'accouplement. Chacune de ces unités d'accouplement comprend un raccord rapide 94, 96, apte à être branché sur le raccord rapide du flexible correspondant. Immédiatement en aval de ces raccords rapides 94, 96 sont placées des vannes d'arrêt 98, 100. Les accumulateurs 86, 88, ainsi que des manomètres de contrôle visuel 102, 104 sont montés en dérivation dans les unités d'accouplement, immédiatement en aval des vannes d'arrêt 98, 100.

Il est à noter qu'en plus de leur rôle de maintien de la pression dans chacun des circuits 82 et 84 lorsque l'outillage de préhension est désaccouplé de la centrale hydraulique, chacun des accumulateurs 86 et 88 permet de compenser les variations de pression dues aux différences de température et aux microfuites éventuelles qui peuvent se produire dans les deux circuits.

En aval des unités d'accouplement, chacun des circuits 82 et 84 est équipé respectivement d'un vérin de contrôle 106, 108.

Le vérin de contrôle 106, monté dans le circuit 82, permet de s'assurer du maintien de la pression dans ce circuit au-dessus d'une valeur minimale de pression prédéterminée pendant les phases d'usinage. Cette valeur minimale de pression prédéterminée est choisie afin de garantir un fonctionnement de l'outillage de préhension en toute sécurité. Elle peut notamment être d'environ 400 bars dans le cas où la pression de service dans le circuit 82 est d'environ 500 bars. Lorsque la pression dans le circuit 82 est supérieure à environ 400 bars, la tige du vérin de contrôle 106 fait saillie hors du corps du vérin. Au contraire, la tige est totalement escamotée si la pression est inférieure à cette valeur.

Un palpage de la tige du vérin de contrôle 106 à n'importe quel moment programmé du cycle d'usinage, réalisé à l'aide d'un automate, permet de contrôler que la pression dans le circuit 82 est bien supérieure à la valeur minimale requise. La poursuite du cycle d'usinage est alors autorisée. Au contraire, si la tige du vérin de contrôle 106 est rentrée, le défaut de palpage de cette tige stoppe le cycle d'usinage jusqu'à cessation de l'anomalie.

Le vérin de contrôle 108 placé dans le circuit 84 n'a pas un fonctionnement du type tout ou rien comme le vérin 106, mais un fonctionnement en continu. Plus précisément, la tige du vérin sort plus ou moins du corps du vérin selon la valeur de la pression régnant dans le circuit 84. Dans ce cas, un palpeur piloté par un automate vient contrôler la position de cette tige, afin de savoir si la pression régnant dans le circuit 84 est compatible avec les exigences de sécurité inhérentes aux moyens de préhension actionnés par ce circuit 84. Différents moyens tels qu'une fiche d'instructions, un repérage par couleur et par marquage, permettent de guider l'opérateur dans la marche à suivre.

Comme l'illustre en détail la figure 7, le circuit 82 alimente en pression de service les trois vérins de bridage 42a montés sur la face latérale 24, au travers d'un bouton de commande 110, les trois vérins de bridage 42b montés sur la face latérale 26 du corps vertical de l'unité centrale au travers d'un bouton de commande 112, et les trois vérins de bridage 42c montés sur la face arrière 30 au travers d'un bouton de commande 114.

Le circuit 82 alimente également chacune des paires de vérins de serrage 34 montées sur l'étau horizontal 12a au travers de deux boutons de commande 116 et 118. Enfin, le circuit 82 peut alimenter, au travers d'un bouton de commande 120, la paire de vérins de serrage 40 de l'étau vertical 12b ou du module remplaçant éventuellement cet étau, sur la face latérale 24 du corps vertical 18 de l'unité centrale 10.

Pour sa part, le second circuit 84 alimente, au travers de deux boutons de commande 122a, 122b deux paires de vérins 56 montées dans l'unité centrale, de façon à permettre le serrage d'une pièce sur un module placé sur la face latérale 24, dans le cas où on utilise un module réalisé conformément à la figure 4. De façon comparable, ce même circuit 84 alimente au travers de deux boutons de commande 124a, 124b deux autres paires de vérins de commande 56 montées dans l'unité centrale, de façon à permettre le serrage d'une pièce dans un module monté sur la face latérale 26 et dépourvu de tout organe hydraulique.

Le circuit 84 alimente également, par l'intermédiaire d'un bouton de commande 126, des vérins de serrage 64 du type quart de tour à simple effet, lorsque de tels vérins sont montés sur le module placé sur la face latérale 26 du corps vertical de l'unité centrale.

Le circuit 84 alimente aussi, au travers d'un bouton de commande 128, une paire de vérins de commande 57 montée dans l'unité centrale pour commander les organes de bridage mécanique portés par un module tel que 12e monté sur la face arrière 30 du corps vertical 18, ainsi que des des vérins de commande 74 montés sur ce même module, du côté de la face 24 du corps vertical 18.

De façon comparable, le circuit 84 alimente au travers d'un bouton de commande 130 quatre vérins de commande 57 montés dans le corps vertical 18 et des vérins de commande 74 montés dans un module fixé sur la face arrière 30 de ce corps vertical, de façon à assurer le serrage des pièces sur ce module, du côté de la face latérale 26.

Comme l'illustrent les figures 1 et 2, les différents boutons de commande 110 à 130 sont montés sur l'unité centrale de façon à pouvoir être manoeuvrés aisément par l'opérateur. Une rotation d'un quart de tour de chacun de ces boutons permet d'assurer le changement d'état du ou des vérins correspondants.

Sur la figure 7, les différents coupleurs qui sont interposés entre l'unité centrale et chacun des modules de préhension ont également été illustrés.

Comme le montre cette dernière figure, les moyens de commande hydraulique comprennent aussi un circuit 132 de retour du fluide hydraulique, raccordé sur chacun des boutons de commande 110 à 130, et qui communique avec l'unité centrale pour permettre le retour du fluide hydraulique vers cette dernière, par un coupleur hydraulique 134, lorsque l'unité centrale est connectée à cette centrale hydraulique.

Bien entendu, l'invention n'est pas limitée au mode de réalisation qui vient d'être décrit à titre d'exemple, mais en couvre toutes les variantes dans le cadre des revendications. Ainsi, on comprendra que le nombre et la nature des moyens de préhension qui sont associés aux différents modules de préhension peuvent être différents de ceux qui ont été décrits. Dans ce cas, les moyens de commande hydraulique illustrés sur la figure 7 peuvent prendre des formes différentes, adaptées à l'agencement particulier de ces moyens de préhension.

## Revendications

1. Outillage de préhension, pour l'usinage de pièces sur une machine-outil, comprenant une unité centrale (10) apte à être montée sur un plateau d'usinage d'une machine-outil et comportant des moyens de bridage (42a,42b,42c) pour la fixation simultanée d'au moins deux modules de préhension différents (12a, ...12e) sur l'unité centrale, chacun de ces modules de préhension comprenant des moyens de préhension (32,34; 38,40; 52,56,57; 64; 70,74) des pièces à usiner, l'unité centrale comportant de plus des moyens de commande (14) pour actionner les moyens de bridage et les moyens de préhension.

2. Outillage selon la revendication 1, caractérisé par le fait que les moyens de bridage comprennent des premiers vérins hydrauliques (42a,42b,42c), les moyens de préhension comprennent des deuxièmes vérins hydrauliques (34,40,56,57,64,74) et les moyens de commande sont des moyens de commande hydraulique (14) qui agissent sur les premiers et les deuxièmes vérins.

3. Outillage selon la revendication 2, caractérisé par le fait que les modules de préhension comprennent au moins un premier module de préhension (12a,12b) pour une première opération d'usinage des pièces et un deuxième module de préhension (12c,12d,12e) pour une deuxième opération d'usinage des pièces, les moyens de commande hydraulique comprenant un premier circuit (82) qui agit sur les premiers vérins (42a,42b,42c) et sur les deuxièmes vérins (34,40) associés au premier module de préhension (12a,12b) par une pression de service donnée, et un deuxième circuit (84) qui agit sur les deuxièmes vérins (56,57,64,74) associés au deuxième module de préhension (12c,12d,12e) par une pression réglable inférieure à ladite pression de service.

4. Outillage selon la revendication 3, caractérisé par le fait que le premier circuit (82) comprend des moyens de contrôle (106) du maintien de la pression de service au-dessus d'un niveau minimal de pression prédéterminé et par le fait que le deuxième circuit comprend des moyens de contrôle (108) de la pression réglable.

5. Outillage selon l'une quelconque des revendications 2 à 4, caractérisé par le fait que les premiers vérins sont des vérins de bridage (42a,42b,42c) montés sur l'unité centrale (10).

6. Outillage selon l'une quelconque des revendications 2 à 5, caractérisé par le fait que les deuxièmes vérins comprennent des vérins de commande (56,57) montés sur l'unité centrale (10) de façon à agir sur des organes de serrage mécanique (52) des pièces, montés sur un module de préhension (12c,12d) fixé à l'unité centrale par les moyens de bridage (42a,42b).

7. Outillage selon l'une quelconque des revendications 2 à 6, caractérisé par le fait que les deuxièmes vérins comprennent des vérins de commande (74) montés sur un module de préhension (12e) et agissant sur des organes de serrage mécanique (70) des pièces, montés sur ce module.

8. Outillage selon l'une quelconque des revendications 2 à 7, caractérisé par le fait que les deuxièmes vérins comprennent des vérins de serrage (64) des pièces, montés sur les modules de préhension.

9. Outillage selon les revendications 5 et 8, caractérisé par le fait que les vérins de bridage (42a, 42b, 42c) et les vérins de serrage (64) sont des vérins quart de tour.

## Claims

1. Gripping tool for machining parts on a machine tool, comprising a central unit (10) which can be installed on a machining plate of a machine tool and incorporating flanging means (42a,42b,42c) for the simultaneous fixing of at least two different gripping modules (12a, .... 12e) on the central unit, each of the gripping modules having gripping means (32,24; 38,40; 52,56,57; 64; 70,74) for the parts to be machined, the central unit also having control means (14) for actuating the flanging means and the gripping means.

2. Tool according to claim 1, characterized in that the flanging means incorporate first hydraulic jacks (42a,42b,42c), the gripping means incorporating second hydraulic jacks (34,40,56,57,64,74) and the control means are hydraulic control means (14) acting on the first and second jacks.

3. Tool according to claim 2, characterized in that the gripping modules incorporate at least one first gripping module (12a,12b) for a first machining operation for the parts and a second gripping module (12c,12d,12e) for a second machining operation for the parts, the hydraulic control means having a first circuit (82) acting on the first jacks (42a,42b,42c) and on the second jacks (34,40) associated with the first gripping module (12a,12b) by a given service pressure, and a second circuit (84) acting on the second jacks (56,57,64,74) associated with the second gripping module (12c,12d,12e) by a regulatable pressure below said service pressure.

4. Tool according to claim 3, characterized in that the first circuit (82) comprises control means (106) for maintaining the service pressure above a minimum, predetermined pressure level and in that the second circuit comprises control means (108) for the regulatable pressure.

5. Tool according to any one of the claims 2 to 4, characterized in that the first jacks are flanging jacks (42a,42b,42c) mounted on the central unit (10).

6. Tool according to any one of the claims 2 to 5, characterized in that the second jacks comprise control jacks (56,57) mounted on the central unit (10) so as to act on mechanical locking members (52) for the parts mounted on a gripping module (12c,12d) fixed to the central unit by flanging means (42a,42b).

7. Tool according to any one of the claims 2 to 6, characterized in that the second jacks comprise control jacks (74) mounted on a gripping module (12e) and acting on mechanical locking members (70) for the parts mounted on said module.

8. Tool according to any one of the claims 2 to 7, characterized in that the second jacks comprise locking jacks (64) for the parts mounted on the gripping modules.

9. Tool according to claims 5 and 8, characterized in that the flanging jacks (42a,42b,42c) and the locking jacks (64) are quarter-turn jacks.

## Patentansprüche

1. Aufspann-Vorrichtung zum Bearbeiten von Werkstücken auf einer Werkzeugmaschine mit einer Zentraleinheit (10), welche auf einem Bearbeitungstisch einer Werkzeugmaschine befestigbar ist und Anflanschmittel (42a, 42b, 42c) zur gleichzeitigen Befestigung von mindestens zwei unterschiedlichen Aufspannmodulen (12a, ...12e) auf der Zentraleinheit umfaßt, wobei jeder dieser Aufspannmodule Aufspannmittel (32, 34; 38, 40; 52, 56, 57; 64; 70, 74) für zu bearbeitende Werkstücke umfaßt und wobei die Zentraleinheit außerdem Steuermittel (14) zur Betätigung der Anflanschmittel und der Aufspannmittel besitzt.

2. Vorrichtung nach Anspruch 1, dadurch gekennzeichnet, daß die Anflanschmittel erste hydraulische Stellantriebe (42a, 42b, 42c) umfassen, daß die Aufspannmittel zweite hydraulische Stellantriebe (34, 40, 56, 57, 64, 74) umfassen und daß die Steuermittel Hydrauliksteuerungen (14) sind, welche auf die ersten und zweiten hydraulischen Stellantriebe wirken.

3. Vorrichtung nach Anspruch 2, dadurch gekennzeichnet, daß die Aufspannmodule mindestens einen ersten Aufspannmodul (12a, 12b) für einen ersten Bearbeitungsgang von Werkstücken und einen zweiten Aufspannmodul (12c, 12d, 12e) für einen zweiten Bearbeitungsgang von Werkstücken umfassen, wobei die Hydrauliksteuerungen einen ersten Kreis (82), der auf die ersten Stellantriebe (42a, 42b, 42c) und auf die mit dem ersten Aufspannmodul (12a, 12b) verbundenen zweiten Stellantriebe (34, 40) mit einem vorgegebenen Arbeitsdruck wirkt, und einem zweiten Kreis (84), der auf die mit dem zweiten Aufspannmodul (12c, 12d, 12e) verbundenen zweiten Stellantriebe (56, 57, 64, 74) mit einem regelbaren, unterhalb des genannten Arbeitsdrucks liegenden Druck wirkt, umfassen.

4. Vorrichtung nach Anspruch 3, dadurch gekennzeichnet, daß der erste Kreis (82) Steuermittel (106) zur Aufrechterhaltung des Arbeitsdrucks oberhalb eines vorgegebenen minimalen Druckniveaus umfaßt und daß der zweite Kreis Steuermittel (108) für den regelbaren Druck besitzt.

5. Vorrichtung nach einem der Ansprüche 2 bis 4, dadurch gekennzeichnet, daß die ersten Stellantriebe Anflansch-Stellglieder (42a, 42b, 42c) sind, welche auf der Zentraleinheit (10) befestigt sind.

6. Vorrichtung nach einem der Ansprüche 2 bis 5, dadurch gekennzeichnet, daß die zweiten Stellantriebe Steuerstellglieder (56, 57) umfassen, welche auf der Zentraleinheit (10) derart angeordnet sind, daß sie auf Einrichtungen zur mechanischen Einspannung (52) von Werkstücken wirken, welche auf einem Aufspannmodul (12c, 12d) befestigt sind, der seinerseits über die Anflanschmittel (42a, 42b) an der Zentraleinheit fixiert ist.

7. Vorrichtung nach einem der Ansprüche 2 bis 6, dadurch gekennzeichnet, daß die zweiten Stellantriebe Steuerstellglieder (74) umfassen, die auf einem Aufspannmodul (12e) befestigt sind und auf Einrichtungen zum mechanischen Einspannen (70) von Werkstücken einwirken, welche auf diesem Modul befestigt sind.

8. Vorrichtung nach einem der Ansprüche 2 bis 7, dadurch gekennzeichnet, daß die zweiten Stellantriebe Einspann-Stellglieder (64) für Werkstücke umfassen, welche auf den Aufspannmodulen befestigt sind.

9. Vorrichtung nach den Ansprüchen 5 und 8, dadurch gekennzeichnet, daß die Anflansch-Stellglieder (42a, 42b, 42c) und die Einspann-Stellglieder (64) jeweils Vierteldrehungs-Stellglieder sind.
